# EUROPÄISCHE PATENTSCHRIFT

(11) **EP 0 711 406 B1**
(45) Veröffentlichungstag und Bekanntmachung des Hinweises auf die Patenterteilung: **25.02.1998**
(21) Anmeldenummer: 94920374.9
(22) Anmeldetag: 30.06.1994
(51) Int. Cl.: G01H 3/12

(54) **AKUSTISCHES MIKROSKOP**
ACOUSTIC MICROSCOPE
MICROSCOPE ACOUSTIQUE

(30) Priorität: 26.07.1993 DE 4324983
(43) Veröffentlichungstag der Anmeldung: 15.05.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: ARNOLD, Walter, D-66119 Saarbrücken (DE); RABE, Ute, D-66111 Saarbrücken (DE)
(74) Vertreter: Rackette, Karl, Dipl.-Phys. Dr.-Ing
(86) Internationale Anmeldenummer: DE9400765
(87) Internationale Veröffentlichungsnummer: WO9503531

(56) Entgegenhaltungen:
- EP-A- 0 383 323
- WO-A-89/12805
- US-A- 4 941 753
- US-A- 5 166 516

## Beschreibung

Die Erfindung betrifft ein akustisches Mikroskop zum Untersuchen einer Probe mit einer an einem Federbalken angebrachten, im oberflächennahen Bereich einer Oberfläche der Probe angeordneten Meßspitze, mit einem an die Probe angekoppelten Ultraschallwandler, mit einer Bewegungsvorrichtung zum Positionieren der Probe bezüglich der Meßspitze, wobei die Meßspitze zeitlich gemittelt einen gleichbleibenden Abstand von der Oberfläche aufweist, und mit einer Regel- und Meßdatenerfassungsvorrichtung.

Ein derartiges akustisches Mikroskop ist aus der WO 89/12805 bekannt. Bei diesem akustischen Mikroskop ist eine an einer Stimmgabel angebrachte Meßspitze im oberflächennahen Bereich einer Oberfläche einer Probe angeordnet. Die einen Federbalken bildende Stimmgabel aus piezoelektrischem Quarz ist über an ihren Schenkeln angebrachte Elektroden mit einer angelegten elektrischen Wechselspannung zu mechanischen Schwingungen anregbar. Diese mechanischen Schwingungen koppeln über die Meßspitze als Ultraschall in die Oberfläche ein und führen in Abhängigkeit der Wechselwirkung zwischen der schwingenden Meßspitze und der Oberfläche der Probe durch die Dämpfung der Schwingung zu einer Verschiebung der Schwingungsfrequenz und/oder der Amplitude der Stimmgabel gegenüber einer freien Schwingung. Mit einer Bewegungsvorrichtung sind die Probe und die Meßspitze relativ zueinander positionierbar, wobei die Meßspitze zeitlich gemittelt in einem gleichbleibenden Abstand von der Oberfläche angeordnet ist. Eine Regel- und Meßdatenerfassungsvorrichtung dient dem Zuordnen der durch die Meßspitze aufgenommenen Meßwerte in Abhängigkeit der Relativposition der Meßspitze zu der Probe.

Bei diesem akustischem Mikroskop dient die Stimmgabel mit der daran angebrachten Meßspitze sowohl als Ultraschallsender als auch als Sensor. Dadurch bedingt muß zur Gewinnung der Meßwerte eine elektronisch durchzuführende Subtraktion von im wesentlichen gleich großen Werten für die Frequenz und die Amplitude der mechanischen Schwingung durchgeführt werden, die verhältnismäßig fehlerträchtig ist. Dies hat insbesondere bei kurzen Meßzeiten pro Meßpunkt auf der Oberfläche ein nachteilig schlechtes Signal/Rauschverhältnis zur Folge. Durch die resonante Anregung der Stimmgabel im Dauerbetrieb ist eine Detektion der Topographie der Oberfläche getrennt von einem Erfassen von beispielsweise elastischen Eigenschaften im Kopplungsbereich zwischen der Meßspitze und der Oberfläche prinzipiell nicht durchführbar. Weiterhin ist bei diesem akustischen Mikroskop vorgesehen, die Stimmgabel vorzugsweise bei ihrer Resonanzfrequenz im Bereich von etwa 32 Kilohertz anzuregen, so daß zwar die Amplitude im Verhältnis zu der anregenden Kraft groß ist, jedoch einkoppelnde störende Schwingungen in diesem Frequenzbereich ebenfalls zu das Signal/Rauschverhältnis nachteilig beeinflußenden verhältnismäßig hohen Störamplituden führt.

Ein weiteres akustisches Mikroskop ist aus der Publikation "Scanning Microdeformation Microscopy" von B. Cretin und F. Sthal in der Zeitschrift "Applied Physics Letters" 62, Seiten 829 bis 831 (1993) bekannt. Bei dieser Vorrichtung werden durch Schwingungen der Meßspitze mit etwa 50 Kilohertz bei der Resonanzfrequenz des Federbalkens auf der Probenoberfläche Mikrodeformationen erzeugt, welche in der Probe eine akustische Welle induzieren. Die akustische Welle ist mit einem Ultraschallwandler in Amplitude und Phase bezüglich der Schwingungen der Meßspitze detektierbar. Durch Abtragen der Amplitude und/oder der Phase der Ultraschallwelle ist in Abhängigkeit von der Position der Meßspitze ein Bild der elastischen Eigenschaften der von der Meßspitze abgetasteten Probenoberfläche erzeugbar. Es ist auch möglich, unter der Oberfläche befindliche Materialinhomogenitäten zu detektieren und abzubilden. Die Ortsauflösung dieses Mikroskopes liegt bei etwa 10 Mikrometer.

Mit einem derartigen akustischen Mikroskop ist es möglich, mechanisch harte und weiche Bereiche der Probenoberfläche zu detektieren. Die Topographie der Probenoberfläche ist jedoch nur indirekt durch Auswertung der empfangenen Ultraschallsignale möglich und erweist sich insbesondere bei verhältnismäßig komplizierten Halbleitertopographien als sehr schwierig. Da moderne Halbleiterstrukturen im Größenbereich von wenigen Mikrometern liegen, ist eine Verwendung dieses Mikroskopes für hochaufgelöste Untersuchungen an derartigen Proben nicht möglich.

Ein weiterer Nachteil dieses akustischen Mikroskopes ist das verhältnismäßig kleine Signal/Rauschverhältnis. Die schwingende Meßspitze wirkt als Punktquelle, so daß die Amplitude der Ultraschallwelle nach Durchlaufen der Probe zusätzlich zu der Dämpfung in dem Ausbreitungsmedium durch die Kugelwellencharakteristik des ausgesandten Ultraschalles an dem Detektionsort sehr gering ist. Aus diesem Grund ist vorgesehen, das durch den Ultraschallwandler detektierte Signal mit einem Lock-in-Verstärker zu verstärken, um das Signal/Rauschverhältnis zu verbessern. Dies hat jedoch eine verhältnismäßig lange Meßzeit zur Folge.

In der Publikation "Using Force Modulation to Image Surface Elasticities with the Atomic Force Microscope" von P. Maivald, H.J. Butt, S.A.C. Gould et al. in der Zeitschrift "Nanotechnology" 2, Seiten 103 folgende (1991) ist ein atomares Kraftmikroskop beschrieben, welches es gestattet, neben der unmittelbaren Messung der Topographie einer Probe bei Konstanthalten der mittleren Kraft auf den Federbalken über ein Verstellelement durch zyklisches Zu- und Wegbewegen der Probe in Bezug auf die Meßspitze ortsabhängig die Elastizitätseigenschaften im Bereich der Probenoberfläche zu messen. In mechanisch weicheren Bereichen ist die Auslenkung des Federbalkens größer als in mechanisch härteren Bereichen. Somit ist durch Auftragen der Maximalauslenkungen der Meßspitze bei gleichbleibender aufgeprägter Kraft in Abhängigkeit von der Position der Meßspitze ein Bild der Topographie sowie der Elastizitätseigenschaften im oberflächennahen Bereich erzeugbar.

Bei einem derartigen atomaren Kraftmikroskop ist es schwierig, die von der Elastizität und die von der Topographie stammenden Anteile in dem Kontrast zu trennen. Die Modulationsfrequenz zum Hin- und Wegbewegen der Probe liegt im Bereich von wenigen Kilohertz, damit die Phasenverschiebung zwischen Anregung und Auslenkung möglichst geringgehalten ist. Bei dem beschriebenen Kraftmikroskop beträgt die Wiederholungsrate 5 Kilohertz und dadurch ergibt sich neben der Gefahr einer Überlagerung durch Schwingungen des mechanischen Aufbaues des akustischen Mikroskopes eine verhältnismäßig lange Meßzeit für die Elastizitätsmessung.

Der Erfindung liegt die Aufgabe zugrunde, ein akustisches Mikroskop zu schaffen, das es gestattet, sowohl die Topographie als auch die Elastizität der Probe mit einer hohen Ortsauflösung und einem hohen Signal/Rauschverhältnis sowie Kontrast schnell und unabhängig voneinander zu messen.

Die Aufgabe wird bei einem akustischen Mikroskop der eingangs genannten Art erfindungsgemäß dadurch gelöst, daß der Ultraschallwandler ein Sendekopf ist, mit dem in einem Abstand von der Meßspitze Ultraschall in die Probe einkoppelbar ist, wobei der Ultraschall eine Frequenz aufweist, die höher als die Resonanzfrequenz des Federbalkens mit der daran angebrachten Meßspitze ist, daß der Federbalken, die Bewegungsvorrichtung, der Sendekopf und die Probe mechanisch steif miteinander verbunden sind und daß mit einer Detektionsvorrichtung die durch den eingekoppelten Ultraschall hervorgerufenen Auslenkungen der Meßspitze bei über einen Regelkreis konstantgehaltenem, über die Auslenkungen gemittelten gleichbleibenden Abstand zwischen der Meßspitze und der Oberfläche der Probe erfaßbar sind.

Die Detektion der Auslenkungen der Meßspitze gestattet ein direktes Erfassen der Amplituden der ultraschallinduzierten Oberflächenwellen als ein Meßsignal für die Elastizitätsmessung. Durch das Konstanthalten eines mittleren Abstandes zwischen der Meßspitze und der Oberfläche der Probe über einen Regelkreis läßt sich mit einem zugeordneten Regelsignal unabhängig von den ultraschallinduzierten Auslenkungen der Meßspitze ein Bild der Topographie der Oberfläche erzeugen. Durch die mechanisch steife Verbindung der Bauelemente und das Vorsehen einer gegenüber der Resonanzfrequenz des Federbalkens mit der daran angebrachten Meßspitze höheren Ultraschallfrequenz ist ein hohes Signal/Rauschverhältnis und ein hoher Kontrast erreicht.

Vorteilhafterweise ist in dem Regelkreis zum Konstanthalten der mittleren Auslenkung der Meßspitze über einen Piezokristall eine erste Detektionseinheit mit einer langsamen Ansprechzeit verwendet. Es ist aber auch möglich, ein Regelsignal über eine niederfrequente Filterung aus einem Signal aus einer einzigen breitbandigen Detektoreinheit zu gewinnen, welches auch das hochfrequente, ultraschallinduzierte Signal enthält.

Vorzugsweise findet Ultraschall mit einer Frequenz von wenigstens einigen Megahertz Verwendung, so daß niederfrequente Störungen im Bereich der Resonanzfrequenz des Federbalkens mit der daran angebrachten Meßspitze in einfacher Weise abtrennbar sind.

Der Federbalken, die Positioniervorrichtung und der Sendekopf sind vorteilhafterweise über eine Haltevorrichtung mechanisch steif miteinander verbunden, wobei die Resonanzfrequenz der Haltevorrichtung kleiner als die Ultraschallfrequenz ist, so daß eine ausreichende mechanische Stabilität des akustischen Mikroskopes gewährleistet ist. Durch die Messung der Auslenkungen der Meßspitze weit oberhalb der Eigenfrequenz des Federbalkens mit der daran angebrachten Meßspitze sind niederfrequente Störungen wie beispielsweise mechanische Schwingungen in dem Aufbau ohne nachteiligen Einfluß.

In einem Ausführungsbeispiel der Erfindung erfolgt die Erfassung der Auslenkungen der Meßspitze über eine Ablenkung eines an dem Federbalken reflektierten Lichtstrahles. Der Regelkreis weist als erste optische Detektionseinheit eine zweifach segmentierte Photodiode auf, die so angeordnet ist, daß bei einer bestimmten Wechselwirkungskraft zwischen der Meßspitze und der Oberfläche der Probe der Lichtstrahl mittig zwischen die beiden Segmente der Photodiode fällt. Die Bandbreite der zweifach segmentierten Photodiode ist wesentlich kleiner als die Frequenz des eingekoppelten Ultraschalles, so daß die hochfrequenten Auslenkungen der Meßspitze mit der ersten Detektionseinheit nicht erfaßbar sind.

Die Detektionsvorrichtung weist eine zweite optische Detektionseinheit auf, die in diesem Ausführungsbeispiel durch eine Einzelphotodiode mit einer Bandbreite von wenigstens der Ultraschallfrequenz und eine glattkantige Abschattungsvorrichtung, beispielsweise eine Rasierklinge, gebildet ist, welche zueinander so einjustiert sind, daß bei konstantgehaltener mittlerer Wechselwirkungskraft zwischen der Meßspitze und der Probenoberfläche ohne eingekoppelten Ultraschall die Abschattungsvorrichtung im wesentlichen die Hälfte des Lichtstrahles blockiert.

In einem weiteren Ausführungsbeispiel besteht die zweite optische Detektionseinheit aus einem Heterodyne-Laufzeit-Interferometer, bei dem in dem langen Interferometerarm mittels einer Frequenzverschiebevorrichtung die Frequenz des Lichtes in diesem Arm um einen vorbestimmten Betrag verschiebbar ist und die beiden überlagerten Ausgangsstrahlen auf jeweils eine Photodiode auftreffen. Mit einem Differenzdemodulationsverstärker ist das verstärkte Differenzsignal der beiden Photodioden bildbar, das anschließend durch Demodulation von der Verschiebefrequenz ein der Auslenkung der Meßspitze und damit des Federbalkens entsprechendes Ausgangssignal enthält.

In einer anderen Ausführungsform der Erfindung ist der Regelkreis und die Detektionsvorrichtung in einem kapazitiven Detektor integriert, bei dem die Meßkapazität aus dem Federbalken und einer gegenüberliegend angeordneten nadelförmigen Gegenelektrode gebildet ist. Die hochfrequenten Änderungen der Meßkapazität sind durch einen Hochpaß von dem als Regelsignal verwendeten, über einen Tiefpaß abgetrennten Teil der Meßkapazitätsänderungen abtrennbar. Dadurch läßt sich der mitunter justierempfindliche optische Aufbau umgehen.

Weitere Ausführungsformen der Erfindung ergeben sich aus den abhängigen Ansprüchen und der nachfolgenden Figurenbeschreibung. Es zeigen:
- Fig. 1:: in einer schematischen Darstellung ein akustisches Mikroskop mit einer Detektionsvorrichtung und einem Regelkreis mit zwei optischen Detektionseinheiten zum Erfassen der Topographie und der ultraschallinduzierten Auslenkungen der Meßspitze,
- Fig. 2:: das Blockschaltbild einer Sende- und Empfangseinheit zum Hervorrufen und Aufnehmen der Auslenkungen der Meßspitze,
- Fig. 3:: ein akustisches Mikroskop in schematischer Darstellung mit einem Heterodyne-Laufzeit-Interferometer als zweiter optischer Detektionseinheit zum Erfassen der ultraschallinduzierten Auslenkungen der Meßspitze und
- Fig. 4:: ein akustisches Mikroskop in einer schematischen Darstellung, bei dem zum Erfassen der ultraschallinduzierten Auslenkungen des Federbalkens ein kapazitive Detektionsvorrichtung Verwendung findet.

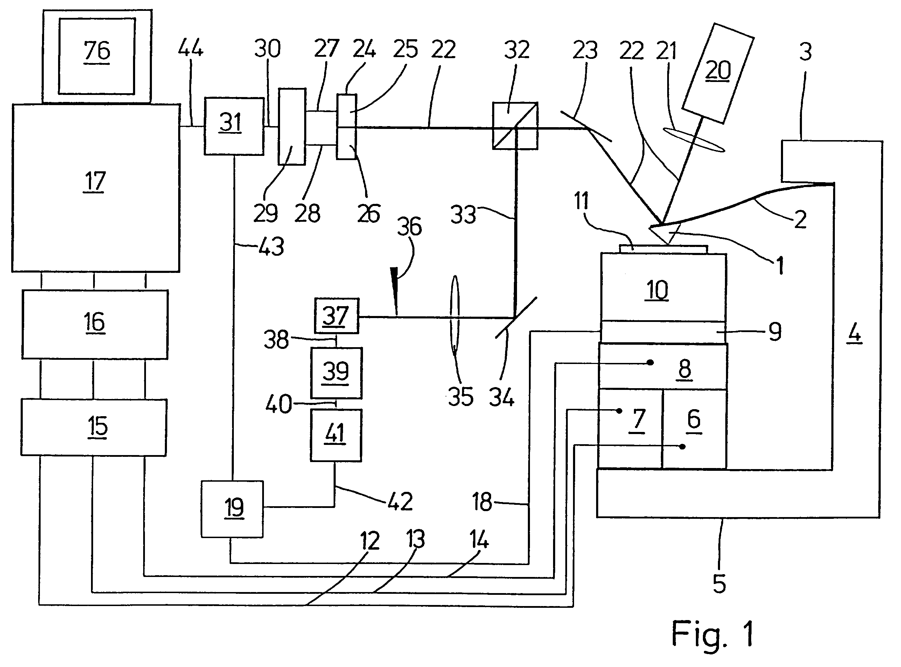

In Fig. 1 ist schematisch ein akustisches Mikroskop dargestellt. Eine Meßspitze 1 ist mit ihrer Basis an einem Ende eines Federbalkens 2 aus Si₃N₄ von etwa 100 Mikrometer Länge befestigt. In diesem Ausführungsbeispiel ist die Meßspitze 1 von pyramidenartiger Form und hat in der Spitze einen Krümmungsradius von etwa 50 Nanometer. Der Federbalken 2 hat eine Federkonstante von etwa 0,1 Newton pro Meter. Der Federbalken 2 ist mit dem anderen Ende an dem oberen Ende 3 einer mechanisch steifen Haltevorrichtung 4 angebracht.

An der Basis 5 der Haltevorrichtung 4 ist ein röhrenförmiger Piezo-Kristall von etwa 1 Zentimeter Durchmesser und 1 Millimeter Wandstärke aufgebracht. Der Piezokristall weist zum Ausführen von rechtwinklig aufeinanderstehenden Bewegungen in einer Ebene um seine Außenfläche 4 Elektroden auf, die jeweils um 90 Grad versetzt jeweils ein Viertel der Außenfläche bedecken. Die Innenfläche ist mit einer an Masse angeschlosenen Elektrode beschichtet. In Fig. 1 sind zwei Elektroden 6, 7 schematisch gezeichnet. Durch Beaufschlagen der zwei sichtbaren, um 90 Grad versetzten Elektroden 6, 7 mit Steuerspannungen ist eine rechtwinklige Bewegung in einer Ebene ausführbar. Die beiden nicht sichtbaren, umfänglich aufgebrachten Elektroden sind mit der negativen Spannung der jeweils gegenüberliegenden Elektrode beschaltet. Eine der sichtbaren Elektroden 6, 7 dient zusammen mit der zugehörigen, um 180 Grad versetzten nicht sichtbaren Elektrode der Bewegung in der x-Richtung und ist im weiteren als x-Elektrode 6 bezeichnet. Die Elektrode 7 dient zusammen mit der entsprechend beschalteten gegenüberliegenden Elektrode der Bewegung in der y-Richtung, die rechtwinklig auf der x-Richtung steht, und ist im weiteren als y-Elektrode 7 bezeichnet.

Ein Ende des röhrenförmigen Piezoelementes ist mit einer ringförmigen, den gesamten Umfang umschließenden z-Elektrode 8 zum Ausführen einer senkrecht auf der Bewegungsebene der x-Elektrode 6 und y-Elektrode 7 versehen. In der Zeichnung sind der besseren Übersichtlichkeit wegen die Größenverhältnisse verzerrt wiedergegeben.

Auf der z-Elektrode 8 befindet sich ein Sendekopf 9, mit dem über einen Vorlaufkörper 10 Ultraschall in eine Probe 11 einkoppelbar ist. Die Meßspitze 1 liegt auf einer Oberfläche der Probe 11 auf. Sie kann aber auch einen Abstand von wenigen 100 Nanometer von der Oberfläche der Probe 11 aufweisen.

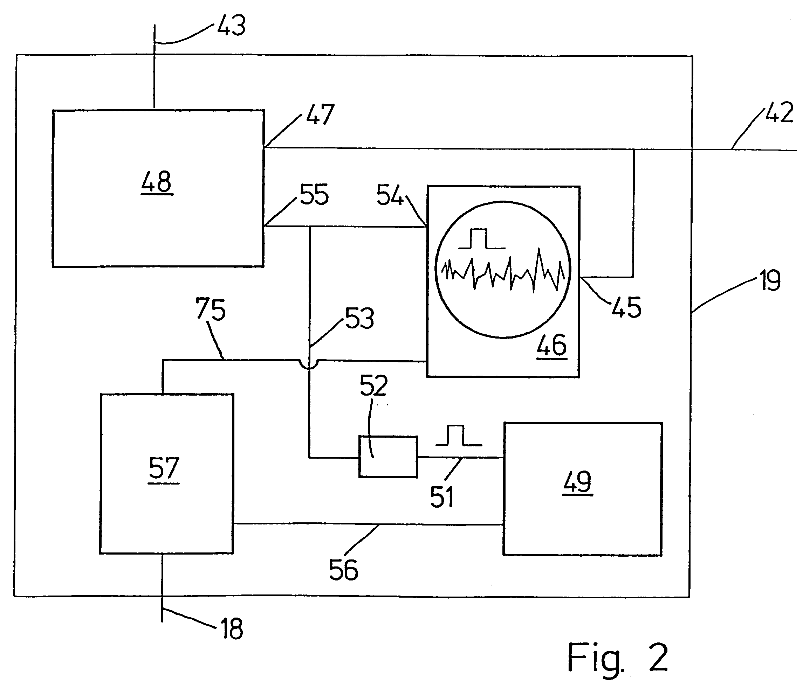

Die Elektroden 6, 7, 8 sind jeweils über zugehörige Piezosteuerleitungen 12, 13, 14 über einen Hochspannungsverstärker 15 und einen Digital-Analog-Wandler 16 mit einer Regel- und Meßdatenerfassungsvorrichtung 17 verbunden. Der Sendekopf 9 ist über eine Leitung 18 an eine Sende- und Empfangseinheit 19 angeschlossen, mittels der, wie weiter unten mit Bezug auf die Fig. 2 genauer beschrieben wird, die Auslenkungen der Meßspitze 1 durch den Ultraschall meßbar sind. Die Auslenkungen der Meßspitze 1 betragen in diesem Ausführungsbeispiel etwa 10 Nanometer.

Aus einer Halbleiterlaserdiode 20, die bei einer Wellenlänge von etwa 670 Nanometer emittiert, fällt ein durch eine Linse 21 fokussierter Laserstrahl 22 auf das abgeflachte, freie Ende des Federbalkens 2, an dem die Meßspitze 1 angebracht ist. Der reflektierte Teil des Laserstrahles 22 fällt auf einen Spiegel 23, der den Laserstrahl 22 durch einen Strahlteiler 32 hindurch auf eine im Vergleich zu der Frequenz des Ultraschalles langsame zweifach segmentierte Photodiode 24 lenkt.

Der Spiegel 23 und die Photodiode 24 sind so angeordnet, daß der Laserstrahl 22 bei einer bestimmten Wechselwirkungskraft zwischen der Meßspitze 1 und der Probe 11 in der Mittelposition der Meßspitze 1 mittig zwischen das erste Element 25 und das zweite Element 26 der zweifach segmentierten Photodiode 24 fällt.

Über Ausgangsleitungen 27, 28 beaufschlagen die Photospannungen des ersten Elementes 25 und zweiten Elementes 26 einen Normierungsverstärker 29, der die Differenz zwischen den Photospannungen der Elemente 25, 26 auf deren Summenwert normiert und verstärkt. Das Ausgangssignal des Normierungsverstärkers 29 beaufschlagt über eine Leitung 30 einen Eingang eines Analog-Digital-Wandlers 31, der die Spannungen digitalisiert.

Der Strahlteiler 32 teilt den von dem Spiegel 23 einfallenden Laserstrahl 22 im Verhältnis von etwa 1:1 auf. Der Strahlteiler 32 ist so angeordnet, daß der an ihm reflektierte Laserstrahl 33 auf einen Spiegel 34 auftrifft, der wiederum den reflektierten Laserstrahl 33 durch eine Kollimationslinse 35 an einer Rasierklinge 36 vorbei auf eine einzellige Photodiode 37 lenkt, deren Bandbreite wenigstens gleich der Frequenz des Ultraschalles ist.

Der Strahlteiler 32, der Spiegel 34, die Kollimationslinse 35 und die Rasierklinge 36 sind so angeordnet, daß bei mittiger Ausrichtung des durch den Strahlteiler 32 durchlaufenden Teiles des Laserstrahles 22 auf die zweifach segmentierte Photodiode 24 die Rasierklinge 36 den reflektierten Laserstrahl 33 im wesentlichen mittensymmetrisch abschattet. Der nichtabgeschattete Anteil des reflektierten Laserstrahles 33 trifft auf die einzellige Photodiode 37. Die optischen Weglängen in diesem Aufbau liegen im Zentimeterbereich.

Die einzellige Photodiode 37 ist über eine Leitung 38 mit einem Lastwiderstand von 50 Ohm und einem Schutzwiderstand beschaltet, die als eine Widerstandsschaltung 39 dargestellt sind. Die einzellige Photodiode 37 ist in dieser Ausführungsform eine Silizum-Pin-Diode mit einer Anstiegszeit von etwa 1 Nanosekunde. Es sind aber auch andere lichtempfindliche Detektoren mit einer größeren Bandbreite als die Frequenz des eingekoppelten Ultraschalles wie Avalanche-Dioden verwendbar. Das Ausgangssignal der Widerstandsschaltung 39 beaufschlagt über eine Leitung 40 den Eingang eines Verstärkers 41 mit einer Verstärkung von etwa 60 Dezibel. Das Ausgangssignal des Verstärkers 41 beaufschlagt über eine Leitung 42 einen Spannungseingang der Sende- und Empfangseinheit 19.

Der Datenausgang der Sende- und Empfangseinheit 19 ist über eine Leitung 43 mit einem zweiten Eingang des Analog-Digital-Wandlers 31 verbunden, mit dem die Spannungen aus der Sende- und Empfangseinheit 19 digitalisierbar sind. Über eine Leitung 44 sind die von dem Analog-Digital-Wandler 31 digitalisierten Daten in die Regel- und Meßdatenerfassungsvorrichtung 17 einspeisbar. In einem Speicher der Regel- und Meßdatenerfassungsvorrichtung 17 sind in Abhängigkeit von der Position der Probe 11 die digitalisierten Ausgangssignale aus dem Normierungsverstärker 29 und der Sende- und Empfangseinheit 19 abspeicherbar. Eine Ausgabeeinheit 76, zum Beispiel ein Bildschirm, ist zur Ausgabe des Inhaltes des Speichers der Regel- und Meßdatenerfassungsvorrichtung 17 in Form einer Farb- oder Grauwertkodierung vorgesehen.

Die Fig. 2 zeigt in einem Blockschaltbild den inneren Aufbau der Sende- und Empfangseinheit 19. Das in der Leitung 42 anliegende Signal des Verstärkers 41 der Fig. 1 liegt an einem Kanal 45 eines Oszilloskopes 46 und an dem Signaleingang 47 eines Zeittorintegrators 48 an.

Ein Ultraschallsender 57 sendet einen kurzen Puls mit etwa 15 Nanosekunden Anstiegszeit über die Leitung 18 an den Sendekopf 9. Gleichzeitig erhält ein Impulsgenerator 49 über eine Leitung 56 einen Startpuls. Der Impulsgenerator 49 gibt daraufhin über eine Leitung 51 einen Rechteckimpuls einstellbarer Zeitdauer auf eine Verzögerungsschaltung 52, mit der der Rechteckimpuls einstellbar gegenüber dem Startpuls verzögerbar ist. Über eine Leitung 53 ist der verzögerte Rechteckimpuls einerseits in einen zweiten Kanal 54 des Oszilloskopes 46 und andererseits auf den Zeittoreingang 55 des Zeittorintegrators 48 einspeisbar. Die Zeitablenkung des Oszilloskopes 46 ist über eine Leitung 75 von dem Impulsgenerator 49 ausgelöst. Mit Hilfe des Oszilloskopes 46 ist die Lage des verzögerten Rechteckimpulses aus der Verzögerungsschaltung 52 bezüglich des an dem Kanal 45 anliegenden Signales kontrollierbar.

Mit dem Zeittorintegrator 48 ist während des an dem Zeittoreingang 55 anliegenden hohen Pegels des zeitverzögerten Rechteckimpulses aus dem Impulsgenerator 49 die an dem Signaleingang 47 anliegende mittlere Amplitude bestimmbar. Der mittlere Amplitudenwert ist über die Leitung 43 in den Analog-Digital-Wandler 31 der Fig. 1 zur Digitalisierung einspeisbar.

Die Wiederholrate des Ultraschallsenders 57 ist so groß, daß der Ultraschallamplitudenwert in jeder Position der Probe 11 wenigstens einmal aktualisiert ist, bevor die Regel- und Meßdatenerfassungseinrichtung 17 einen neuen Amplitudenwert einliest. In diesem Ausführungsbeispiel beträgt die Ultraschallwiederholungsrate etwa 1 Kilohertz, so daß bis zu einer Einlesefrequenz von etwa 500 Hertz sichergestellt ist, daß wenigstens ein Ultraschallpuls an einer Position der Probe 11 ausgesendet ist.

Wie bereits erwähnt, ist die mittlere Wechselwirkungskraft zwischen der Meßspitze 1 und der Probe 11 während der Messung konstantzuhalten. Dies ist dadurch erreichbar, daß in einem Regelkreis der durch den Strahlteiler 32 transmittierte Teil des Laserstrahles 22 über die Regel- und Meßdatenerfassungsvorrichtung 17 durch entsprechende Verstellung der z-Elektrode 8 mittig zwischen dem ersten Element 25 und zweiten Element 26 der zweifach segmentierten Photodiode 24 haltbar ist. Bei positiven oder negativen Änderungen des Ausgangspegels des Normierungsverstärkers 29 ist die Spannung in der Piezosteuerleitung 14 an der z-Elektrode 8 so nachregelbar, daß die Ausgangsspannung des Normierungsverstärkers 29 sich dem Neutralwert nähert. Die Regelspannung für die z-Elektrode 8 gibt in Abhängigkeit der x- und y- Position der Probe 11 ein Bild der Topographie der Probe 11.

Die Frequenz des Ultraschalls ist zwischen etwa 5 Megahertz und etwa 100 Megahertz einstellbar und liegt somit weit oberhalb der Resonanzfrequenz des in diesem Ausführungsbeispiel verwendeten Federbalkens 2 mit der Meßspitze 1 von einigen Kilohertz.

Bei dem eingekoppelten Ultraschall handelt es sich in diesem Ausführungsbeispiel um Longitudinalwellen, so daß die Oberfläche der Probe 11 Normalschwingungen ausführt. Diese Normalschwingungen führen zu einer hochfrequenten Auslenkung des Federbalkens 2, welche jedoch durch die zu geringe Bandbreite der langsamen zweifach segmentierte Photodiode 24 nicht erfaßbar sind, in der einzelligen Photodiode 37 mit einer Bandbreite im Megahertzbereich jedoch durch die Abschattung eines Teiles der reflektierten Laserstrahles 33 mit der Rasierklinge 36 zu einem Meßsignal führt.

In diesem Ausführungsbeispiel ist die Verzögerungsschaltung 52 so eingestellt, daß in dem Zeittorintegrator 48 die mittlere Amplitude des ersten hochfrequenten Ausschlages des Federbalkens 2 in Folge der Oberflächenschwingung der Probe 11 bestimmbar ist. Nach dem Abspeichern eines Meßwertes für die Auslenkung der Meßspitze 1 ist die Probe 11 mittels entsprechender Ausgangssignale der Regel- und Meßdatenerfassungsvorrichtung 17 auf die x-Elektrode 6 und die y-Elektrode 7 an der nächsten Meßstelle positionierbar. Anschließend erfolgt der nächste Ultraschallmeßzyklus.

Während der Abrasterung der Oberfläche der Probe 11 über den vorbestimmten Meßbereich erfolgt in der Ausgabeeinheit 76 eine ortsabhängige Darstellung der Regelspannungen der z-Elektrode 8 zur Darstellung der Topographie der Oberfläche der Probe 11 sowie eine ortsabhängige Darstellung der ultraschallinduzierten Auslenkung der Meßspitze 1 über die entsprechenden Meßwerte. Diese Darstellung erfolgt vorzugsweise in einer üblichen Grau- oder Farbwertkodierung. Auf diese Weise ist gleichzeitig in meßtechnisch voneinander unabhängiger Weise sowohl ein Bild der Topographie der Oberfläche der Probe 11 sowie ein den Elastizitätseigenschaften der Probenoberfläche entsprechendes Bild der Amplituden der Ultraschallwellen an der Oberfläche der Probe 11 erzeugbar.

Zur meßtechnischen Erfassung anderer zeitlicher Bereiche des ausgesandten Ultraschalls ist es möglich, das Zeittor mittels der Verzögerungsschaltung 52 zeitlich zu verändern. Dies ist insbesondere auch dann erforderlich, wenn ein Wechsel des Vorlaufkörpers 10 mit einer Veränderung der Durchlaufzeit erfolgt ist.

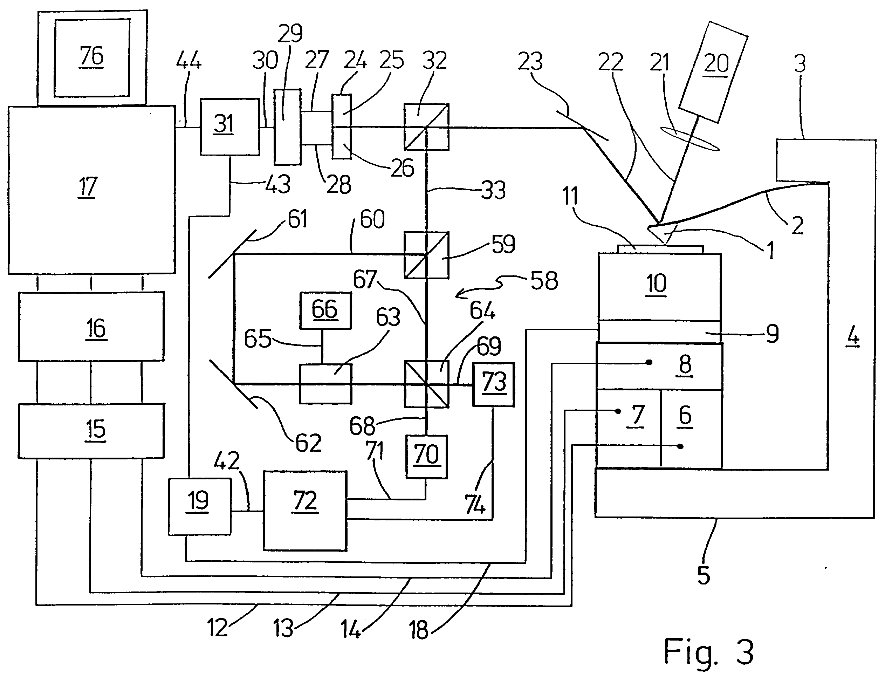

In Fig. 3 ist schematisch ein weiteres Ausführungsbeispiel eines akustischen Mikroskopes dargestellt, bei dem die denen der Fig. 1 entsprechenden Bauelemente mit den gleichen Bezugszeichen versehen und im folgenden nicht weiter erläutert sind. Bei dem Ausführungsbeispiel der Fig. 3 ist der von dem Strahlteiler 32 reflektierte Laserstrahl 33 in ein Heterodyne-Laufzeit-Interferometer 58 eingekoppelt. Der reflektierte Laserstrahl 33 trifft auf einen Eingangsstrahlteiler 59, der die auftreffende Intensität etwa zur Hälfte in den langen Arm 60 des Heterodyne-Laufzeit-Interferometers 58 einkoppelt.

In dem langen Arm 60 befinden sich zwei Spiegel 61, 62, welche das Licht in dem langen Arm 60 durch eine auf der Grundlage des akusto-optischen Effektes arbeitenden Bragg-Zelle 63 hindurch auf einen Ausgangsstrahlteiler 64 lenken. Die Spiegel 61, 62 sowie die Bragg-Zelle 63 sind so angeordnet, daß das in die erste Ordnung gebrochene, frequenzverschobene Ausgangslicht der Bragg-Zelle 63 auf den Ausgangsstrahlteiler 64 fällt. Die Bragg-Zelle 63 ist über eine Leitung 65 mit einer Ansteuerschaltung 66 verbunden, mittels der der Betrag der Frequenzverschiebung in diesem Ausführungsbeispiel auf etwa 80 Megahertz eingestellt ist.

Der kurze Arm 67 des Heterodyne-Laufzeit-Interferometers 58 ist durch den durch den Eingangsstrahlteiler 59 transmittierten Anteil von etwa der halben Intensität des Laserstrahles 33 gebildet. Die Lichtbündel des langen Armes 60 und des kurzen Armes 67 sind über den Ausgangsstrahlteiler 64 kollinear in den Interferenzstrahlen 68, 69 überlagert.

Der erste Interferenzstrahl 68 trifft auf eine erste Interferenzphotodiode 70, deren Ausgangssignal über eine Leitung 71 einen ersten Eingang eines Differenzdemodulationsverstärkers 72 beaufschlagt. Der zweite Interferenzstrahl 69 trifft auf eine zweite Interferenzphotodiode 73, deren Ausgangssignal über eine Leitung 74 einen zweiten Eingang des Differenzdemodulationsverstärkers 72 beaufschlagt.

In den Ausgangssignalen der Interferenzphotodiode 70, 73 sind in bekannter Weise durch die Laufzeitdifferenz des Lichtes zwischen dem kurzen Arm 67 und dem langen Arm 60 Phasenmodulation enthalten, die der Auslenkungsdifferenzen der Meßspitze 1 proportional sind. Der Wegunterschied zwischen den Armen 60, 67 ist vorzugsweise so gewählt, daß die Empfindlichkeit des Interferometers für die eingestrahlte Ultraschallfrequenz maximal ist, das heißt, daß die Armlängendifferenz etwa gleich der Lichtgeschwindigkeit dividiert durch das Zweifache der mit dem Brechungsindex multiplizierten Ultraschallfrequenz ist.

In dem Differenzdemodulationsverstärker 72 ist die Differenz des Ausgangssignales der ersten Interferenzphotodiode 70 und der zweiten Interferenzphotodiode 73 bildbar, wobei dieses Differenzsignal durch die Frequenzverschiebung in der Bragg-Zelle 63 mit anschließender Demodulation von tieffrequenten Störungen entkoppelbar ist. Dadurch sind beispielsweise Intensitätsschwankungen in dem reflektierten Strahl 33 oder niederfrequente mechanische Störungen ausgleichbar. Das Differenzsignal ist weiterhin in dem Differenzdemodulationsverstärker 72 verstärkbar und beaufschlagt über die Leitung 42 den Zeittorintegrator 48 der Sende- und Empfangseinheit 19.

In einem abgewandelten Ausführungsbeispiel ist das Heterodyne-Laufzeit-Interferometer 58 durch ein aktiv stabilisiertes faseroptisches Laufzeit-Interferometer ersetzt. Das stabilisierte Interferometer weist in seinem langen Arm einen Phasenverschieber auf, der in einem Regelkreis über eine Leitung mit einem Differenzverstärker verbunden ist, so daß Änderungen der optischen Weglänge ausgleichbar sind. Die Ein- und Auskopplung erfolgt wie in dem in Fig. 3 dargestellten Ausführungsbeispiel mit dem Heterodyne-Laufzeit-Interferometer.

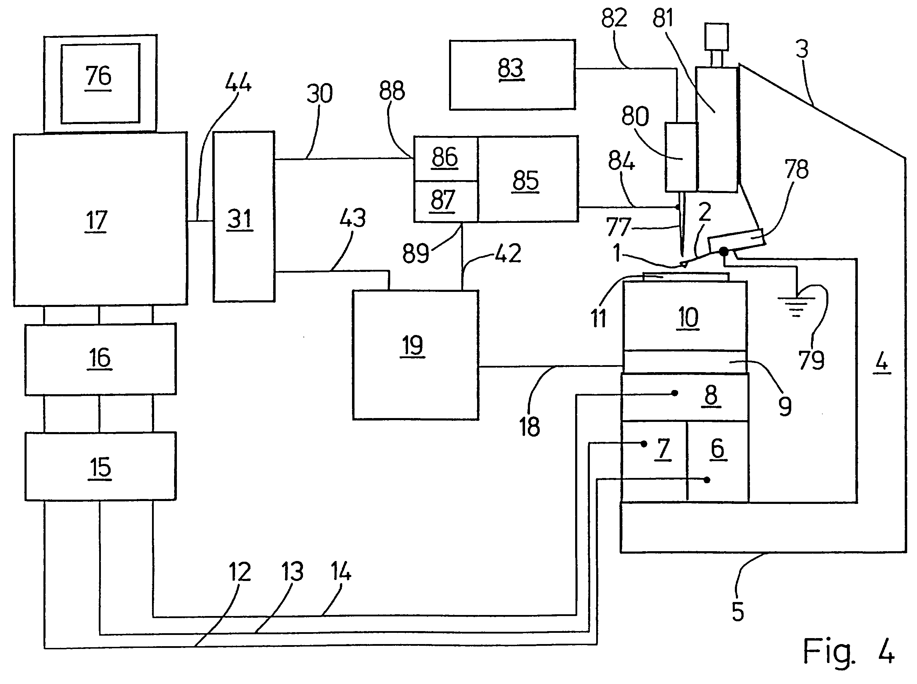

In Fig. 4 ist ein weiteres Ausführungsbeispiel der Erfindung dargestellt, bei dem die denen in Fig. 1 und Fig. 3 dargestellten entsprechenden Bauelemente mit den gleichen Bezugszeichen versehen und im folgenden nicht weiter erläutert sind. In dem Ausführungsbeispiel der Fig. 4 sind die Auslenkungen der Meßspitze 1 mittels einer kapazitiven Detektionsvorrichtung erfaßbar. Die kapazitive Detektionsvorrichtung weist eine Meßkapazität auf, die durch die metallisch beschichtete Rückseite des Federbalkens 2 und eine nadelspitzenartige Gegenelektrode 77 gebildet ist, deren Spitze in Richtung des Federbalkens 2 ausgerichtet ist. Der Federbalken 2 ist an einer elektrisch leitenden Halterung 78 angebracht, die an eine Masse 79 angeschlossen ist.

Die Gegenelektrode 77 ist mechanisch an einem Piezoelement 80 angebracht und elektrisch von diesem entkoppelt. Das Piezoelement 80 ist an einem mechanischen Verschiebetisch 81 befestigt, der wiederum an der Haltevorrichtung 4 angebracht ist. Das Piezoelement 80 ist über eine Leitung 82 von einem regelbaren Netzgerät 83 mit Spannung beaufschlagbar. Die Gegenelektrode 77 ist grob über die mechanische Verstellung des Verschiebetisches 81 und fein über die Änderung der Versorgungsspannung des Piezoelementes 80 in einem Abstand über dem Federbalken 2 positionierbar.

Die Gegenelektrode 77 ist elektrisch über eine Leitung 84 mit einem Kapazitätsmeßkreis 85 verbunden. Die Meßkapazität ist in einem Schwingkreis des Kapazitätsmeßkreises 85 integriert, der durch einen bei etwa 915 Megahertz schwingenden Oszillator angeregt ist. Die Frequenz des Oszillators ist so gewählt, daß sie im steilsten Bereich der Flanke der Resonanzkurve des Schwingkreises liegt. Änderungen der Meßkapazität durch Auslenkungen der Meßspitze 1 und damit des Federbalkens 2 führen zu einer Änderung der Resonanzfrequenz des Schwingkreises und damit der durch den Oszillator angeregten Amplitude. Diese Amplitudenänderungen sind über einen Tiefpaß 86 und einen Hochpaß 87 in einen niederfrequenten und einen hochfrequenten Anteil auftrennbar.

Der Tiefpaß 86 hat einen Durchlaßbereich bis etwa 20 Kilohertz, und der Hochpaß 87 hat einen Durchlaß ab etwa dem halben Wert der Ultraschallfrequenz. Somit sind die langsamen, durch Änderungen der Topographie der Oberfläche der Probe 11 auftretenden Auslenkungen der Meßspitze 1 an einem Niederfrequenzausgang 88 und die hochfrequenten, ultraschallinduzierten Auslenkungen der Meßspitze 1 an einem Hochfrequenzausgang 89 abgreifbar.

Das an dem Niederfrequenzausgang 88 anliegende Signal ist über die Leitung 30 in den Analog-Digital-Wandler 31 einspeisbar und dient als Regelsignal zum Konstanthalten des mittleren Abstandes zwischen der Oberfläche der Probe 11 und der Meßspitze 1. Das an dem Hochfrequenzausgang 89 anliegende Signal ist über die Leitung 42 in die Sende- und Empfangseinheit 19 einkoppelbar. Die weitere Datenverarbeitung erfolgt wie bei Fig. 1, 2 und 3 beschrieben.

## Patentansprüche

1. Akustisches Mikroskop zum Untersuchen einer Probe (11) mit einer an einem Federbalken (2) angebrachten, im oberflächennahen Bereich einer Oberfläche der Probe (11) angeordneten Meßspitze (1), mit einem an die Probe (11) angekoppelten Ultraschallwandler, mit einer Bewegungsvorrichtung zum Positionieren der Probe (11) bezüglich der Meßspitze (1), wobei die Meßspitze (1) zeitlich gemittelt einen gleichbleibenden Abstand von der Oberfläche aufweist, und mit einer Regel- und Meßdatenerfassungsvorrichtung (17), **dadurch gekennzeichnet**, daß der Ultraschallwandler ein Sendekopf (9) ist, mit dem in einem Abstand von der Meßspitze (1) Ultraschall in die Probe (11) einkoppelbar ist, wobei der Ultraschall eine Frequenz aufweist, die höher als die Resonanzfrequenz des Federbalkens (2) mit der daran angebrachten Meßspitze (1) ist, daß der Federbalken (2), die Bewegungsvorrichtung, der Sendekopf (9) und die Probe (11) mechanisch steif miteinander verbunden sind und daß mit einer Detektionsvorrichtung (36, 37, 39, 41; 58; 2, 77, 85, 87) die durch den eingekoppelten Ultraschall hervorgerufenen Auslenkungen der Meßspitze (1) bei über einen Regelkreis (8, 17, 24, 29; 2, 8, 17, 77, 85, 86) konstantgehaltenem, über die Auslenkungen gemittelten gleichbleibenden Abstand zwischen der Meßspitze (1) und der Oberfläche der Probe (11) erfaßbar sind.

2. Akustisches Mikroskop nach Anspruch 1, dadurch gekennzeichnet, daß die Frequenz des eingekoppelten Ultraschalles wenigstens eine Größenordnung höher als die Resonanzfrequenz des Federbalkens (2) mit der daran angebrachten Meßspitze (1) ist.

3. Akustisches Mikroskop nach Anspruch 1 oder 2, dadurch gekennzeichnet, daß der Federbalken (2), die Bewegungsvorrichtung, der Sendekopf (9) und die Probe (11) über eine Haltevorrichtung (4) mechanisch steif miteinander verbunden sind, wobei die Resonanzfrequenz der Haltevorrichtung (4) kleiner als die Frequenz des eingekoppelten Ultraschalles ist.

4. Akustisches Mikroskop nach einem der Ansprüche 1 bis 3, dadurch gekennzeichnet, daß ein von dem Federbalken (2) reflektierter Lichtstrahl (22) über optische Umlenkvorrichtungen (23, 32) in den Regelkreis (8, 17, 24, 29), der eine erste optische Detektionseinheit (24, 29) aufweist, und in die Detektionsvorrichtung (36, 37; 58) als einer zweiten optischen Detektionseinheit einkoppelbar ist.

5. Akustisches Mikroskop nach Anspruch 4, dadurch gekennzeichnet, daß die erste Detektionseinheit einen zweifach segmentierten lichtempfindlichen Detektor (24) und einen Normierungsverstärker (29) aufweist, wobei der Lichtstrahl (22) in der Mittelposition der Meßspitze (1) mittig auf den zweifach segmentierten Detektor (24) fällt und in der Mittelposition ein Neutralsignal an dem Ausgang des Normierungsverstärkers (29) anliegt, das aus der auf die Summe der Ausgangsspannungen der Elemente (25, 26) des segmentierten Detektors (24) normierte Differenz der Ausgangsspannungen gebildet ist.

6. Akustisches Mikroskop nach Anspruch 4 oder 5, dadurch gekennzeichnet, daß die zweite Detektionseinheit einen einzelligen lichtempfindlichen Detektor (37) und eine Strahlabschattungsvorrichtung (36) aufweist, wobei die Strahlabschattungsvorrichtung (36) in Bezug auf den einzelligen lichtempfindlichen Detektor (37) so angeordnet ist, daß in der Mittelposition der Meßspitze (1) der auf den einzelligen Detektor (37) fallende Lichtstrahl (33) mittig abgeschattet ist.

7. Akustisches Mikroskop nach Anspruch 4 oder 5, dadurch gekennzeichnet, daß die Detektionsvorrichtung als eine zweite Detektionseinheit ein Heterodyne-Laufzeit-Interferometer (58) aufweist, in dessen langem Arm (60) eine Frequenzverschiebungsvorrichtung (63) zum Verschieben der Frequenz des in dem langen Arm (60) laufenden Lichtstrahles angeordnet ist.

8. Akustisches Mikroskop nach Anspruch 7, dadurch gekennzeichnet, daß die Interferenzstrahlen (68, 69) des Heterodyne-Laufzeit-Interferometers (58) jeweils einen lichtempfindlichen Detektor (70, 73) beaufschlagen, deren Ausgangssignale in einem Differenzdemodulationsverstärker (72) voneinander subtrahiert und von der Frequenz der Frequenzverschiebevorrichtung (63) demoduliert verstärkbar sind.

9. Akustisches Mikroskop nach einem der Ansprüche 1 bis 3, dadurch gekennzeichnet, daß die Detektionsvorrichtung eine durch den metallisch beschichteten Federbalken (2) und eine nadelförmige Gegenelektrode (77) gebildete Meßkapazität aufweist.

10. Akustisches Mikroskop nach Anspruch 9, dadurch gekennzeichnet, daß mittels eines Kapazitätsmeßkreises (85) die Veränderungen in der Meßkapazität durch die Auslenkungen der Meßspitze (1) erfaßbar sind.

11. Akustisches Mikroskop nach Anspruch 10, dadurch gekennzeichnet, daß mittels eines Tiefpasses (86) und eines Hochpasses (87) die hochfrequenten, ultraschallinduzierten Auslenkungen der Meßspitze (1) von den niederfrequenten Auslenkungen aus dem Ausgangssignal des Kapazitätsmeßkreises (85) separierbar sind, wobei das Ausgangssignal des Tiefpasses (86) als Regelsignal für den Regelkreis (2, 8, 17, 77, 85, 86) dient.

12. Akustisches Mikroskop nach einem der Ansprüche 1 bis 11, dadurch gekennzeichnet, daß mittels einer Sende- und Empfangseinheit (19) über eine Zeittorschaltung (48) in einem durch einen Impulsgenerator (49) und eine Verzögerungsschaltung (52) vorbestimmbaren Zeitbereich die mittlere ultraschallinduzierte Auslenkung der Meßspitze (1) nach Aussenden des Ultraschalles durch den Sendekopf (9) erfaßbar ist.

13. Akustisches Mikroskop nach Anspruch 12, dadurch gekennzeichnet, daß der Zeitbereich so eingestellt ist, daß der Mittelwert der ersten ultraschallinduzierten Auslenkung der Meßspitze (1) erfaßbar ist.

14. Akustisches Mikroskop nach einem der Ansprüche 1 bis 13, dadurch gekennzeichnet, daß in der Regel- und Meßdatenerfassungsvorrichtung (17) die Meßdaten der Topographie und einer der Auslenkung der Meßspitze (1) proportionalen Meßgröße in Abhängigkeit von der Position der Probe (11) abspeicherbar sind.

## Claims

1. Acoustic microscope for investigating a specimen (11), comprising a measuring tip (1) fastened on a resilient beam (2) and disposed in a zone close to the surface of said specimen (11), an ultrasonic converter coupled to said specimen (11), a moving device for positioning said specimen (11) relative to said measuring tip (1), wherein said measuring tip (1) is maintained at a mean constant spacing over time, and comprising a control and data acquisition device (17), **characterized in that** said ultrasonic converter is a transmitter head (9) suitable to introduce ultrasound into said specimen (11) at a spacing from said measuring tip (1), with the ultrasound having a frequency higher than the resonance frequency of said resilient beam (2) with said measuring tip (1) mounted thereon, that said resilient beam (2), said moving device, said transmitter head (9) and said specimen (11) are interconnected in a mechanically rigid manner, and that the ultrasound-induced deflections of said measuring tip (1) are detectable by means of a detector (36, 37, 39, 41; 58; 2, 77, 85, 87), with a pacing between said measuring tip (1) and the surface of said specimen (11) being maintained constant via a control loop (8, 17, 24, 29; 2, 8, 17, 77, 85, 86) and being averaged as a function of the deflections.

2. Acoustic microscope according to Claim 1, characterized in that the introduced ultrasonic frequency is at least of an order higher than the order of the resonance frequency of said resilient beam (2) together with said measuring tip (1) mounted thereon.

3. Acoustic microscope according to Claim 1 or 2, characterized in that said resilient beam (2), said moving device, said transmitter head (9) and said specimen (11) are interconnected in a mechanically rigid form through a holding device (4), with the frequency of said holding device (4) being lower than the introduced ultrasonic frequency.

4. Acoustic microscope according to any of Claims 1 to 3, characterized in that a light beam (22) reflected by said resilient beam (2) can be introduced via optical deviating means (23, 32) into said control loop (8, 17, 24, 29) comprising a first optical detector unit (24, 29), and into said detector means (36, 37; 58) as second optical detector unit.

5. Acoustic microscope according to Claim 4, characterized in that said first detector unit comprises a double-segmented photosensitive detector and a normalizing amplifier (29), said light beam (22) being incident on said double-segmented detector (24) at a central position of said measuring tip (1), and with a neutral signal being applied, at the central position, to the output of said normalizing amplifier (29), which signal is formed by the difference of output voltages normalized to the cumulative value of the output voltages of the elements (25, 26) of said segmented detector (24).

6. Acoustic microscope according to Claim 4 or 5, characterized in that said detector unit comprises a single-cell photosensitive detector (37) and a smooth-edged beam-vignetting device (36), said smooth-edged beam-vignetting device (36) being so arranged relative to said single-cell photosensitive detector (37) that at the central position of said measuring tip (1) said light beam (33) incident on said single-cell detector (37) will be centrally vignetted.

7. Acoustic microscope according to Claim 4 or 5, characterized in that said detector means comprises a heterodyne transit interferometer (58) as second detector unit, with a long arm (60) including a frequency shifting means (63) provided therein for shifting the frequency of the light beam passing in said long arm (60).

8. Acoustic microscope characterized in that 7, characterized in that each of the interference beams (68, 69) of said heterodyne transit interferometer (58) is respectively applied at a photosensitive (70, 73) whose output signals are subtracted from each other in a differential demodulation amplifier (72) and may be amplified with demodulation by the frequency of said frequency shifting means.

9. Acoustic microscope according to any of Claims 1 to 3, characterized in that said detector device comprises a metallized resilient beam (2) and a measuring capacitor formed by a needle-type counter electrode (77).

10. Acoustic microscope according to Claim 9, characterized in that a capacitance-measuring circuit (85) is provided for detecting the variations in said measuring capacitor which are due to the deflections of said measuring tip (1).

11. Acoustic microscope according to Claim 10, characterized in that a low-pass filter (86) and a high-pass filter (87) are provided to separate the high-frequency ultrasound-induced deflections of said measuring tip (1) from the low-frequency deflections of the output signal of said capacitance-measuring circuit (85), with the output signal of said low-pass filter (86) serving as control signal for said control loop (2, 8, 17, 77, 85, 86).

12. Acoustic microscope according to any of Claims 1 to 11, characterized in that a transmitter and receiver unit (19) is provided for detecting, via a time gate integrator (48), the mean ultrasound-induced deflection of said measuring tip (1) after the emission of ultrasound by said transmitter head (9) within a period which may be determined by a pulse generator (49) and a time-delay circuit (52).

13. Acoustic microscope according to Claim 12, characterized in that said period is so set that the mean value of the first ultrasound-induced deflection of said measuring tip (1) may be detected.

14. Acoustic microscope according to any of Claims 1 to 13, characterized in that the measured data of the topography and of a measurand proportional to the deflection of said measuring tip (1) may be stored in said control and data acquisition device (17) in dependence on the position of said specimen (11).

## Revendications

1. Microscope acoustique à examiner un spécimen (11), qui comprend une touche de mesure (1) fixée à une barre élastique (2) et disposée dans une zone proche à la surface d'une aire dudit spécimen (11), un convertisseur d'ultrasons accouplé audit spécimen (11), un dispositif de mouvement à positionner ledit spécimen (11) relativement à ladite touche de mesure (1), dans lequel ladite touche de mesure (1) se trouve à un écart constant, dans la moyenne dans le temps, et qui comprend un moyen de commande et d'enregistrement des données de mesure (17), **caractérisé en ce** que ledit convertisseur d'ultrasons est une tête émettrice (9)appropriée à introduire des ultrasons dans ledit spécimen (11) à un écart de ladite touche de mesure (1), les ultrasons ayant une fréquence plus haute que la fréquence de résonance de ladite barre élastique (2), ensemble avec ladite touche de mesure (1) y fixée, que ladite barre élastique (2), ledit dispositif de mouvement, ladite tête émettrice (9) et ledit spécimen (11) sont reliés, l'un à l'autre, de façon mécaniquement raide, et en ce que les excursions de ladite touche de mesure (1), qui sont induites par les ultrasons introduits, peuvent être détectées, moyennant un dispositif détecteur (36, 37, 39, 41; 58; 2, 77, 85, 87), à un écart entre ladite touche de mesure (1) ) et la surface dudit spécimen (11), qui est tenu à un niveau constant via un circuit de réglage (8, 17, 24, 29; 2, 8, 17, 77, 85, 86) et dont la moyenne est faite en fonction des excursions.

2. Microscope acoustique selon la revendication 1, caractérisé en ce que la fréquence des ultrasons introduits est au moins d'un ordre plus grand que l'ordre de la fréquence de résonance de ladite barre élastique (2) ensemble avec ladite touche de mesure (1) y fixée.

3. Microscope acoustique selon la revendication 1 ou 2, caractérisé en ce que ladite barre élastique (2), ledit dispositif de mouvement, ladite tête émettrice (9) et ledit spécimen (11) sont reliés l'un à l'autre de façon mécaniquement raide via un dispositif porteur (4), la fréquence de résonance dudit dispositif porteur (4) étant plus basse que la fréquence des ultrasons introduits.

4. Microscope acoustique selon une quelconque des revendications 1 à 3, caractérisé en ce qu'un faisceau lumineux (22) réfléchi par ladite barre élastique (2) peut être introduit via des moyens optique déviateurs (23, 32) dans ledit circuit de réglage (8, 17, 24, 29) comprenant une première unité détectrice optique (24, 29), et dans ledit moyen détecteur (36, 37; 58) en tant que deuxième unité optique détectrice.

5. Microscope acoustique selon la revendication 4, caractérisé en ce que ladite première unité détectrice comprend un détecteur photosensible (24) doublement segmenté et un amplificateur à cadrage (29), ledit faisceau lumineux (22) étant incident sur ledit détecteur doublement segmenté (24), à une position centrale de ladite touche de mesure (1), et à un signal neutre étant appliqué, dans la position centrale, à la sortie dudit amplificateur à cadrage (29), lequel signal est formé par la différence des tensions de sortie, cadrée à la valeur cumulée des tensions de sortie des éléments (25, 26) dudit détecteur segmenté (24).

6. Microscope acoustique selon la revendication 4 ou 5, caractérisé en ce que ladite unité détectrice comprend un détecteur photosensible unicellulaire (37) et un moyen d'obscurcissement du faisceau (36), ledit moyen d'obscurcissement du faisceau (36) étant disposé, relativement audit détecteur photosensible unicellulaire (37) de façon qu'à la position centrale de ladite touche de mesure (1) ) ledit faisceau lumineux (33) incident sur ledit détecteur unicellulaire (37) soit obscurci centralement.

7. Microscope acoustique selon la revendication 4 ou 5, caractérisé en ce que ledit moyen détecteur comprend un interféromètre du temps de transit en hétérodyne (58) en tant que deuxième unité détectrice, à un long bras (60) qui comprend un moyen décaleur de fréquence (63) y disposé, à décaler la fréquence du faisceau lumineux passant au dedans dudit long bras (60).

8. Microscope acoustique selon la revendication 7, caractérisé en ce que chacun des faisceaux d'interférence (68, 69) dudit interféromètre du temps de transit en hétérodyne (58) est respectivement appliqué à un détecteur photosensible (70, 73) dont les signaux de sortie sont soustraits l'un de l'autre dans un amplificateur démodulateur différentiel (72) et peuvent être amplifié à démodulation par la fréquence dudit moyen décaleur de fréquence.

9. Microscope acoustique selon une quelconque des revendications 1 à 3, caractérisé en ce que ledit dispositif détecteur comprend une barre élastique (2) métallisée et un capaciteur de mesure formé par une contre-électrode (77) en aiguille.

10. Microscope acoustique selon la revendication 9, caractérisé en ce qu'un circuit capacimètre (85) sert à détecter les variations dans ledit capaciteur de mesure, qui sont dues aux excursions de ladite touche de mesure (1).

11. Microscope acoustique selon la revendication 10, caractérisé en ce qu'un filtre passe-bas (86) et un filtre passe-haut (87) sont prévus à séparer les excursions haute fréquence de ladite touche de mesure (1), qui sont induites par les ultrasons, des excursions basse fréquence du signal de sortie dudit circuit capacimètre (85), le signal de sortie dudit filtre passe-bas (86) servant en tant que signal de réglage pour ledit circuit de réglage (2, 8, 17, 77, 85, 86).

12. Microscope acoustique selon une quelconque des revendications 1 à 11, caractérisé en ce qu'un bloc émetteur et récepteur (19) est prévu à détecter, via un circuit à gâchette de temps (48), l'excursion moyenne de ladite touche de mesure (1), qui est induite par les ultrasons après l'émission des ultrasons par ladite tête émettrice (9), dans un intervalle déterminable par un générateur d'impulsions (49) et un circuit de temporisation (52).

13. Microscope acoustique selon la revendication 12, caractérisé en ce que ledit intervalle est si ajusté que la valeur moyenne de la première excursion de ladite touche de mesure (1), qui est induite par les ultrasons, peut être détectée.

14. Microscope acoustique selon une quelconque des revendications 1 à 13, caractérisé en ce que les données mesurées de la topographie et d'une grandeur mesurée proportionnelle à l'excursion de ladite touche de mesure (1) peuvent être mise en mémoire, en fonction de la position dudit spécimen (11, dans ledit moyen de commande et d'enregistrement des données de mesure (17).
